(19) **Europäisches Patentamt**
**European Patent Office**
**Office européen des brevets**

(11) **EP 4 653 971 A1**

(12) **EUROPEAN PATENT APPLICATION**
published in accordance with Art. 153(4) EPC

(43) Date of publication:
26.11.2025 Bulletin 2025/48

(21) Application number: 23919413.7

(22) Date of filing: 06.11.2023

(51) International Patent Classification (IPC):
*G05D 1/00* (2024.01)

(86) International application number:
PCT/CN2023/130029

(87) International publication number:
WO 2024/159849 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.01.2023 CN 202310093130
30.01.2023 CN 202310093126
30.01.2023 CN 202310099399

(71) Applicant: Zhejiang Sunseeker Industrial Co., Ltd.
Jinhua, Zhejiang 321000 (CN)

(72) Inventor: FEI, Tao
Jinhua, Zhejiang 321000 (CN)

(74) Representative: Manna, Sara et al
Società Italiana Brevetti S.p.A.
Piazza di Pietra, 39
00186 Roma (IT)

(54) **OPERATION METHOD FOR AUTONOMOUS OPERATION DEVICE, AND AUTONOMOUS OPERATION DEVICE**

(57) Embodiments of the present invention relate to the technical field of autonomous operation devices, and provide an operation method for an autonomous operation device, and an autonomous operation device. The method comprises: controlling an autonomous operation device to operate according to a preset first path of a first electronic map, wherein the first electronic map comprises a plurality of coordinates, and the first path covers passable coordinates in the first electronic map; and in the operation process of the autonomous operation device, detecting whether an omission event occurs when the autonomous operation device operates at coordinates, and recording parameter information of target coordinates where an omission event occurs, wherein the target coordinates are coordinates where an omission event occurs in the operation process of the autonomous operation device. According to the present invention, in an operation process of an autonomous operation device, whether an omission event occurs when the autonomous operation device operates at coordinates is detected, and parameter information of coordinates where an omission event occurs is recorded, so that the autonomous operation device can actively detect and record operation omissions, thereby providing a data support basis for eliminating operation omissions.

FIG. 1

**Description**

## TECHNICAL FIELD

The embodiments of present disclosure relate to the technical field of autonomous operation devices, and in particular, to an operation method for an autonomous operation device and an autonomous operation device.

## BACKGROUND

Autonomous operation devices equipped with moving blades often exhibit operational omissions during operation due to deviations of the travel path of the autonomous operation device from the originally planned path caused by uneven terrain at the work site or GPS positioning interference caused by obstructions such as plants or buildings. Taking an intelligent lawn mower as an example, unmown areas or missed mowing inevitably occurs during mowing operations of the intelligent lawn mower. When the intelligent lawn mower performs mowing operations for a garden owner, the owner expects the intelligent lawn mower to complete the mowing task autonomously and intelligently, without leaving any grass uncut. Therefore, eliminating unmown areas or minimizing the area of such omissions serves as a core technical metric in determining whether the intelligent lawn mower can gain the trust of users.

## SUMMARY

The objective of one embodiment of the present disclosure and the present disclosure is to provide an operation method for an autonomous operation device and an autonomous operation device. During the operation process of the autonomous operation device, whether an omission event occurs when the autonomous operation device operates at grid cells is detected, and parameter information of grid cells where an omission event occurs is recorded, such that the autonomous operation device can actively detect and record operation omissions, thereby providing a data support basis for eliminating operation omissions.

To achieve the above objective, the present disclosure provides an operation method for an autonomous operation device, including: controlling the autonomous operation device to operate according to a first path of a preset first electronic map, where the first electronic map includes a plurality of coordinates, and the first path covers passable coordinates in the first electronic map; and detecting, during an operation process of the autonomous operation device, whether an omission event occurs when the autonomous operation device operates at the passable coordinates, and recording parameter information of target coordinates where the omission event occurs, where the target coordinates are coordinates where the omission event occurs during the operation process of the autonomous operation device.

The embodiments of the present disclosure further provide an autonomous operation device, including a control module and a detection module connected to the control module, where the control module is configured to control the autonomous operation device to operate according to a first path of a preset first electronic map, the first electronic map includes a plurality of coordinates, and the first path covers passable coordinates in the first electronic map; and the detection module is configured to detect, during an operation process of the autonomous operation device, whether an omission event occurs when the autonomous operation device operates at the coordinates, and record parameter information of target coordinates where the omission event occurs, and the target coordinates are coordinates where the omission event occurs during the operation process of the autonomous operation device.

To achieve the above objective, the present disclosure provides an information interaction method for an autonomous operation device, which is applied to autonomous operation devices, and includes controlling the autonomous operation device to perform Q operations on the first electronic map including a plurality of coordinates, and recording the target coordinates where the omission event occurs during each operation process of the autonomous operation device to form an omission coordinate set, where Q is an integer greater than 1; determining, after the Q operations of the autonomous operation device are completed, whether overlaps exist among Q omission coordinate sets recorded in the Q operation processes; and if overlaps exist among the Q omission coordinate sets recorded in the Q operation processes, providing a notification including omission location information of the target coordinates overlapping across the Q omission coordinate sets.

The embodiments of the present disclosure further provide an autonomous operation device, including a control module. The control module is configured to control the autonomous operation device to perform Q operations on the first electronic map including a plurality of coordinates, and record the target coordinates where the omission event occurs during each operation process of the autonomous operation device to form an omission coordinate set, where Q is an integer greater than 1; the control module is further configured to determine, after the Q operations of the autonomous operation device are completed, whether overlaps exist among Q omission coordinate sets recorded in the Q operation processes; and if overlaps exist among the Q omission coordinate sets recorded in the Q operation processes, provide a notification including omission location information of the target coordinates overlapping across the Q omission coordinate sets.

To achieve the above objective, the present disclosure provides a method for detecting an omission event of an autonomous operation device, including: controlling the autonomous operation device to operate on an electronic map including a plurality of coordinates; acquiring operational data collected by a sensing device in the autonomous operation device when the autonomous operation device operates at the coordinates; and for each of the coordinates, determining, based on the operational data corresponding to the coordinate, whether the omission event occurs when the autonomous operation device operates at the coordinate.

The embodiments of the present disclosure further provide an autonomous operation device, including a control module and a detection module connected to the control module. The control module is configured to control the autonomous operation device to operate on an electronic map including a plurality of coordinates. The detection module is configured to acquire operational data collected by a sensing device in the autonomous operation device when the autonomous operation device operates at the coordinates; and for each of the coordinates, determine, based on the operational data corresponding to the coordinate, whether an omission event occurs when the autonomous operation device operates at the coordinate.

## BRIEF DESCRIPTION OF THE DRAWINGS

FIG. 1 is a detailed schematic flowchart according to a first embodiment of the present disclosure.

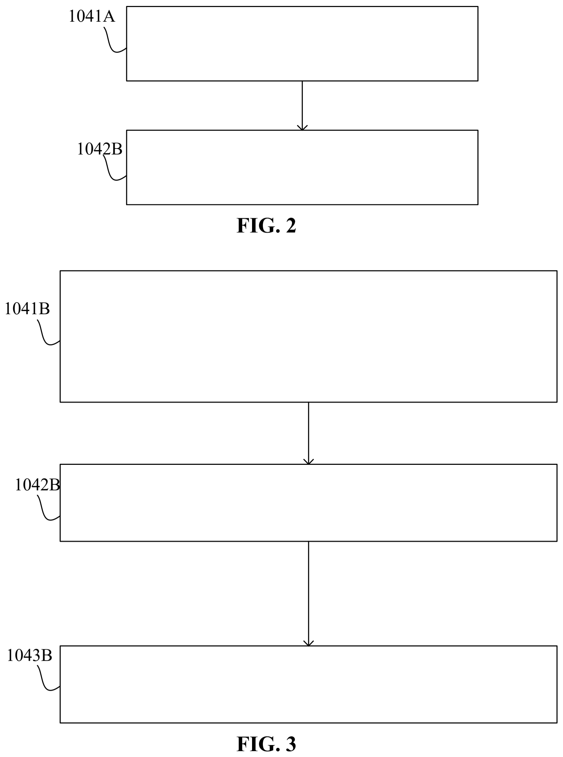

FIG. 2 is a detailed flowchart of a first mode of step 104 according to the first embodiment of the present disclosure.
FIG. 3 is a detailed flowchart of a second mode of step 104 according to the first embodiment of the present disclosure.

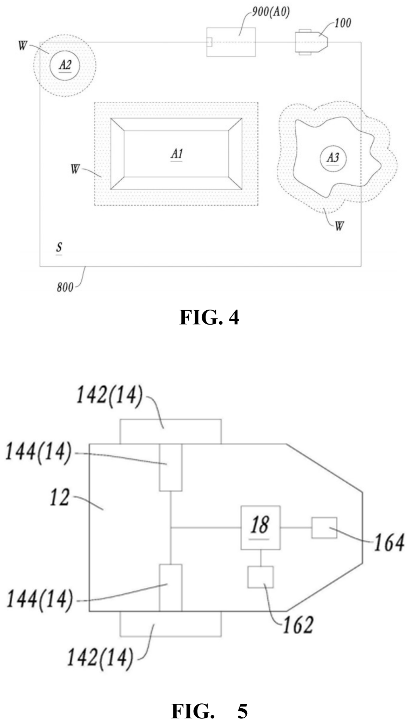

FIG. 4 is a schematic view of a working area of an autonomous operation device according to a second embodiment of the present disclosure.
FIG. 5 is a schematic structural diagram of an autonomous operation device according to the second embodiment of the present disclosure.

## DETAILED DESCRIPTION

The embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification are not necessarily all refer to the same embodiment. In addition, particular features, structures, or characteristics may be combined in any manner in one or more embodiments.

As used in this specification and the appended claims, the singular forms "a" and "the" include plural references, unless otherwise specified clearly in the context. It should be noted that the term "or" is generally used as a meaning of "or/and", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

A first embodiment of the present disclosure relates to an operation method for an autonomous operation device, which is applied to autonomous operation devices.

An autonomous operation device is a robot that can autonomously move in a preset area and perform a specific operation, typically such as an intelligent sweeper/vacuum cleaner performing a cleaning operation, or an intelligent lawn mower performing a lawn mowing operation. The autonomous operation device operates according to a given planned path during the operation process. Taking an intelligent lawn mower as an example, the path control mode of the intelligent lawn mower is typically configured to follow a boustrophedon or spiral pattern to achieve full-coverage mowing. Existing intelligent lawn mowers are incapable of detecting unmown areas during operation and rely on probabilistic coverage through randomized path planning to address missed mowing, resulting in low efficiency and ineffective resolution of the missed mowing issue. Although some intelligent lawn mowers are capable of autonomous path planning and can identify deviations between the actual operation path and the planned path to correct the operation path deviations of the intelligent lawn mower, during practical operation of the lawn mower, when the lawn mower operates on uneven or wet lawns, the resulting operation path deviations due to slippage are often not corrected in a timely manner. As a result, the mower deviates from the preset course, leading to unmown areas.

Missed mowing of the intelligent lawn mower due to deviation from the preset course generally manifests in the following several aspects. For example, during linear mowing of the lawn mower, when the mower encounters irregular terrain or steep slopes, the heading control loop and position control loop, which are configured to adjust the drive motor to maintain a stable linear trajectory, fail to effectively control the motors under drastic changes in the lawn mower's operating state, resulting in deviation of the linear mowing of the lawn mower. During operation, the mower body may experience longitudinal slippage in the direction parallel to the wheel rotation and lateral slippage in the direction perpendicular to the wheel rotation. Typically, when mowing on a sloped lawn and the mowing direction is perpendicular to the slope direction, lateral slippage occurs. The above problems of missed mowing of the lawn mower caused by slippage are not addressed by existing products or technologies in terms of observation and effective detection, and targeted solutions for replanning the unmown areas are also not provided.

When mowing along a planned path, the intelligent lawn mower may experience slippage upon encountering sloped terrain, depressions, or water accumulation, such that the intelligent lawn mower deviates from the planned path. Typically, when the autonomous operation device traverses a slope with water accumulation or moist areas in a direction approximately parallel to the gradient, the autonomous operation device is prone to rapid slipping, such that the mowing deck of the intelligent lawn mower rapidly passes over the grass near puddles without sufficiently cutting the grass, thereby causing missed mowing. According to the embodiment, during the operation process of the intelligent lawn mower, whether an operation omission event, such as a missed mowing event, occurs is detected, and the operation omission event is recorded on an electronic map, serving as a basis for subsequent remedial mowing operations. This enables the autonomous operation device to replan a remedial mowing path for regions where the operation omission event occurs, thereby minimizing the area of operation omission regions caused by the occurrence of the operation omission event.

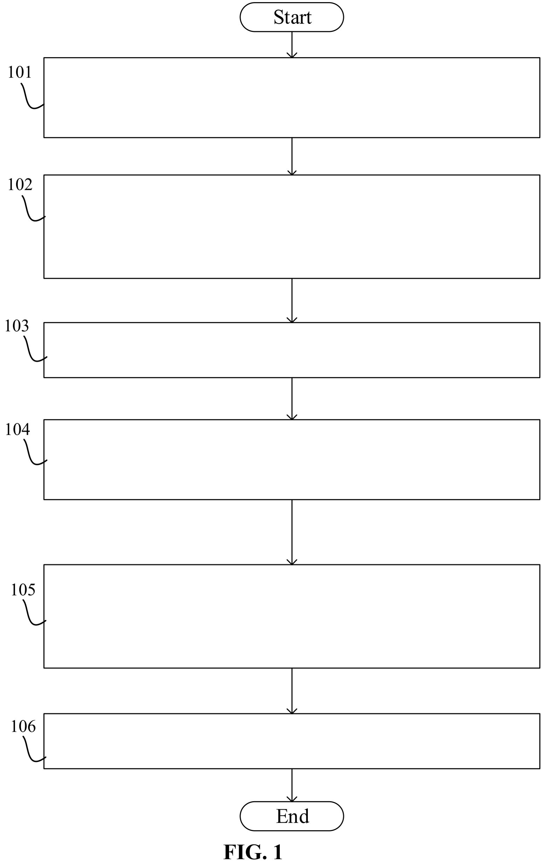

FIG. 1 illustrates a detailed flowchart of the operation method for the autonomous operation device according to the embodiment.

In step 101, the autonomous operation device is controlled to operate according to a first path of a preset first electronic map. The first electronic map includes a plurality of coordinates, and the first path covers passable coordinates in the first electronic map.

Specifically, the first path corresponding to the first electronic map is preset in the autonomous operation device, and the operational task of the autonomous operation device is to operate according to the first path. The first electronic map includes a plurality of coordinates. In some examples, the first electronic map is a gridded map, and the first electronic map includes a plurality of grid cells, with each grid cell including a plurality of coordinates distributed therein. The first path of the preset first electronic map covers the passable coordinates in the first electronic map.

Prior to initiating operation, the autonomous operation device first determines whether the first electronic map exists and whether the first electronic map requires correction or resetting. If the first electronic map exists, the device enters an operational mode and operates according to the first path of the preset first electronic map. If the first electronic map is absent or requires correction or resetting, the device enters a mapping mode. In some examples, the mapping mode includes controlling the autonomous operation device to travel along the boundary for at least one full cycle to record boundary coordinates. Upon obtaining the boundary coordinates, the first electronic map is generated. The origin of the boundary coordinates is typically set at the location where the autonomous operation device is docked at a docking station or the location of a ground reference station. After the first electronic map is generated, the first electronic map is gridded to obtain a gridded first electronic map. The parameter information of each grid cell in the first electronic map may be stored in a memory. The parameter information of the grid cell includes coordinate parameters and grid-type parameters. The coordinate parameters include planar coordinates X and Y, and elevation coordinate Z. The grid-type parameters include passable grid cells and impassable grid cells.

After confirmation of the first electronic map, the autonomous operation device plans a travel path. The travel path generally includes a departure path, a return path, and an operation path. The departure path refers to the path from the docking station to the operation starting point; the return path refers to the path from the operation ending point to the docking station; and the operation path refers to the travel path from the operation starting point to the operation ending point. In the embodiment, the first path of the preset first electronic map is the travel path described above, that is, the first path includes the departure path, the return path, and the operation path. The operation path is planned as a linear reciprocating path, i.e., a boustrophedon path. In some examples, the operation path is planned as a spiral path. In the embodiment, the linear reciprocating path includes straight segments and turning segments, and the turning segment connects two adjacent straight segments. In some examples, the turning segment connects two straight segments spaced at equal or unequal intervals. The two straight segments connected by the same turning segment have opposite travel directions, and the distance between two adjacent straight segments is smaller than the diameter of the cutting deck of the autonomous operation device, thereby ensuring full coverage of the linear reciprocating path.

In step 102, during the operation process of the autonomous operation device, whether an omission event occurs when the autonomous operation device operates at the coordinates is detected, and parameter information of target coordinates where the omission event occurs is recorded, where the target coordinates are the coordinates where the omission event occurs during the operation process of the autonomous operation device.

Specifically, during the operation process of the autonomous operation device, for each coordinate on the first electronic map, whether the omission event occurs when the autonomous operation device operates at the coordinate is detected. If an omission event occurs, the corresponding coordinate is designated as a target coordinate, and parameter information of the target coordinate where the omission event occurs is recorded. The parameter information of the target coordinate where the omission event occurs includes planar coordinates X and Y, and elevation coordinate Z of the autonomous operation device. In some examples, during the operation process of the autonomous operation device, whether the omission event occurs when the autonomous operation device operates at the passable coordinates is detected, and parameter information of target grid cells where the omission event occurs is recorded, where the target grid cells are the grid cells to which the coordinates where the omission event occurs during the operation process of the autonomous operation device belongs.

In the embodiment, for each of the coordinates, operational data collected by a sensing device in the autonomous operation device in the process that the autonomous operation device operates at the coordinate is acquired, and based on the operational data corresponding to the coordinate, whether the omission event occurs when the autonomous operation device operates at the coordinate is determined. In some examples, a deviation value of the operational data is calculated based on the operational data within a preset time period in the operational data corresponding to the coordinate. If the deviation value is greater than a preset deviation threshold, it is determined that an omission event occurs when the autonomous operation device operates at the coordinate. If the deviation value is less than or equal to the preset deviation threshold, it is determined that no omission event occurs when the autonomous operation device operates at the coordinate.

The sensing device may be an inertial sensor or a positioning sensor. The inertial sensor may be, for example, an accelerometer or a gyroscope, and the positioning sensor may be, for example, a satellite positioning device (GNSS-RTK). GNSS is Global Navigation Satellite System and refers to all navigation satellite systems in general, and RTK is a real-time kinematic carrier phase differential positioning technology. By utilizing GNSS positioning technology and differential methods based on carrier phase observations from two measurement stations, the carrier phase collected by the reference station is transmitted to the receiver for calculating positioning coordinates through carrier phase differential solution, which is a widely used satellite positioning measurement method. In some examples, a vision-based positioning device is employed, and the vision-based positioning device may be selected from vehicle-mounted vision-based positioning systems used in visual active navigation in the prior art. In some examples, the positioning sensor includes a satellite positioning device and a vision-based positioning device. A fusion algorithm is used to integrate the two types of positioning positions to improve the accuracy of position information.

When acquiring operational data collected by the inertial sensor in the autonomous operation device, a preset time period is selected as a time window, and the root mean square value of the operational data collected by the inertial sensor within this time window is calculated to represent the deviation value of the operational data. Specifically, the deviation value is the root mean square value of the operational data collected by the inertial sensor on the planar coordinates X and Y, and the elevation coordinate Z. Taking the planar coordinate X-axis as an example, the root mean square value of the operational data collected by the inertial sensor within the selected preset time period (i.e., one time window) is calculated using Equation I:

$$\sqrt{\frac{X_1^2 + X_2^2 + \ldots + X_N^2}{N}} \qquad \text{Equation (1)}$$

where N denotes the number of operational data samples acquired within one time window, and $X_1$, $X_2$, ..., $X_N$ denote the operational data on the X-axis. The calculations for the planar coordinate Y-axis and the elevation coordinate Z-axis follow the same method as Equation (1).

Based on the root mean square values in the X, Y, and Z coordinates calculated using Equation (1), if any one of the root mean square values in the X, Y, and Z coordinates is greater than the preset deviation threshold, it is determined that an omission event occurs when the autonomous operation device operates at the coordinate. Such omission event is defined as a first type omission event. The first type omission event refers to the longitudinal slippage or lateral slippage of the vehicle that occurs when the autonomous operation device operates on uneven terrain.

In some examples, if any one of the values calculated according to Equations (2) to (5) is greater than the preset deviation threshold, it is determined that an omission event occurs when the autonomous operation device operates at the coordinate.

$$\sqrt{\frac{1}{n}\sum_{1}^{n} X_n^2} \qquad \text{Equation (2)}$$

$$\sqrt{\frac{1}{n}\sum_{1}^{n} Y_n^2} \qquad \text{Equation (3)}$$

$$\sqrt{\frac{1}{n}\sum_{1}^{n} Z_n^2} \qquad \text{Equation (4)}$$

$$\sqrt{\frac{1}{n}\sum_{1}^{n} X_n^2 + \frac{1}{n}\sum_{1}^{n} Y_n^2 + \frac{1}{n}\sum_{1}^{n} Z_n^2} \qquad \text{Equation (5)}$$

Taking an intelligent lawn mower as an example, the scenario of longitudinal slippage of the vehicle is that: slippage occurs when the intelligent lawn mower descends a slope in a direction approximately parallel to the gradient and encounters puddles and the like. Under the influence of gravity, the mower rapidly slides downward, and the mowing deck of the intelligent lawn mower rapidly passes over the grass near puddles without sufficiently cutting the grass, thereby causing missed mowing. According to the embodiment, this scenario is effectively identified, and targeted remedial mowing is performed, thereby fundamentally solving the missed mowing issue and significantly improving mowing efficiency. The omission event is detected based on the operational data of the vehicle, and the operational data includes linear velocity information, linear acceleration information, angular velocity information, angular acceleration information, heading information, and positional coordinate information of the vehicle during operation. For example, since accelerometers are relatively more sensitive to longitudinal slippage of the vehicle, the linear acceleration information from the accelerometers is generally used to detect the omission event.

Similarly, taking the intelligent lawn mower as an example, the scenario of lateral slippage of the vehicle is that: when the intelligent lawn mower travels on a slope surface in a direction approximately perpendicular to the gradient, due to gravity, the vehicle may dip downward (typically, the front end of a rear-drive vehicle dips more noticeably, while the rear end of a front-drive vehicle dips more noticeably). The control system of the vehicle corrects for such downward deviations, resulting in a real trajectory that initially deviates below the ideal path and subsequently curves upward back to the ideal path, thereby causing missed mowing. In addition, due to the low uniformity of terrain flatness of the grass and grass conditions as well as the complexity of the outdoor environment, during the travel of the intelligent lawn mower, the traction of the left and right driving wheels often differs (e.g., due to variations in grass density or moisture). The control system of the vehicle may correct deviations caused by traction differences, which may still result in a real trajectory that initially deviates below the ideal path and subsequently curves back to the ideal path, thereby causing missed mowing. Since gyroscopes are relatively more sensitive to lateral slippage of the vehicle, the angular velocity information from the gyroscopes is generally used to detect the omission event.

In some examples, the first type omission event is further detected by the following method: when acquiring operational data collected by the inertial sensor in the autonomous operation device, determining whether an absolute difference between operational data at two consecutive time points in the operational data corresponding to a grid cell exceeds a second preset threshold. If the absolute difference between operational data at two consecutive time points in the operational data corresponding to the grid cell exceeds the second preset threshold, it is determined that the first type omission event occurs when the autonomous operation device operates at the grid cell. If the absolute difference between operational data at two consecutive time points in the operational data corresponding to the grid cell does not exceed the second preset threshold, it is determined that no omission event occurs when the autonomous operation device operates at the grid cell. For example, during the operation process of the autonomous operation device, the operational data of the accelerometer is acquired, and a sudden variation of the accelerometer is calculated. The sudden variation of the accelerometer represents a transient change in vehicle motion detected by the current accelerometer, that is, the absolute difference between the operational data of the accelerometer at two consecutive time points exceeding the second preset threshold indicates the occurrence of a sudden variation of the accelerometer. When the intelligent lawn mower encounters external disturbances such as protruding rocks or depressions that are prone to cause navigation errors of the vehicle during navigation, such disturbances may trigger the sudden variation of the accelerometer. In some examples, whether the omission event occurs is further detected by acquiring operational data collected by the positioning sensor during autonomous operation, and such omission event is defined as a second type omission event. The second type omission event refers to positioning errors generated by the positioning sensor during operation of the autonomous operation device.

Taking the intelligent lawn mower as an example, vehicle positioning primarily relies on GNSS and a dead reckoning fusion algorithm. When obstructions such as large plants or buildings are present in the garden requiring mowing, GNSS satellite signals are subjected to interference. In particular, the multipath effects caused by such obstructions of plants and buildings may increase GNSS positioning errors and significantly degrade the performance of the dead reckoning fusion algorithm, resulting in the occurrence of the second type omission event of the intelligent lawn mower. When acquiring positional coordinate information collected by the positioning sensor in the autonomous operation device, an absolute difference between positional coordinate information of the autonomous operation device at two consecutive time points is calculated as a deviation value. If the deviation value is greater than the preset deviation threshold, it is determined that the second type omission event occurs when the autonomous operation device operates at the grid cell.

In step 103, after the autonomous operation device completes operation according to the first path, each of the target coordinates where the omission event occurs is mapped to the first electronic map to obtain a second electronic map.

Specifically, after the autonomous operation device completes operation according to the first path, for each target coordinate where the omission event occurs during the operation process, the target coordinate is remapped to the first electronic map under a 2D coordinate system based on the parameter information recorded at each target coordinate and with reference to the origin coordinate system, thereby generating the second electronic map. Each target coordinate in the second electronic map retains the same coordinate values as in the first electronic map, such that each coordinate in the first electronic map corresponds one-to-one to a coordinate in the second electronic map. The second electronic map reflects the target coordinates where the omission event occurs after the autonomous operation device completes operation according to the first path.

In step 104, a second path at least covering all the target coordinates in the second electronic map is generated, and the autonomous operation device is controlled to operate according to the second path.

Specifically, all the target coordinates in the second electronic map are the target coordinates where the omission event occurs, and the autonomous operation device is required to replan a path covering these target coordinates to eliminate the omission event. After the second path is replanned for all the target coordinates, the autonomous operation device resumes operation according to the second path. Taking the intelligent lawn mower as an example, the intelligent lawn mower resumes mowing according to the second path for remedial mowing for the missed areas resulting from the mowing according to the first path.

In one example, generating the second path at least covering all the target coordinates in the second electronic map in step 104 includes the following substeps:

In substep 1041A, two target coordinates are selected from all the target coordinates as a starting coordinate and an ending coordinate, respectively.

In substep 1042A, in the second electronic map, a shortest path starting from the starting coordinate and ending at the ending coordinate and covering all the target coordinates, is generated as the second path.

Specifically, after completing operation according to the first path, the autonomous operation device either returns to the docking station along the return path in the first path or stops at the operation ending point of the operation path in the first path. In this case, the autonomous operation device may select one target coordinate nearest to its current position along the X-axis as the starting coordinate and one target coordinate farthest from its current position along the X-axis as the ending coordinate. The autonomous operation device then treats the starting coordinate as the operation starting point of the operation path and the ending coordinate as the operation ending point of the operation path. A shortest-path algorithm is then used to plan the second path, which is defined as the shortest path that starts at the starting coordinate, ends at the ending coordinate, and passes through all the target coordinates. The shortest-path algorithm employs commonly used algorithms in the art for shortest path, such as the A* algorithm or Dijkstra's algorithm, and the details are not described here.

In one example, generating the second path at least covering all the target coordinates in the second electronic map in step 104 includes the following substeps:

In substep 1041B, the target coordinates in the second electronic map are divided into a plurality of coordinate groups, each of the coordinate groups includes a plurality of target coordinates. For each target coordinate in each coordinate group, a distance between the target coordinate and at least one target coordinate in the same coordinate group is less than or equal to a first preset threshold, and a distance between the target coordinate and any one target coordinate in different coordinate groups is greater than the first preset threshold.

Specifically, any one target coordinate of all the target coordinates in the second electronic map is selected, and whether the distance between the any one target coordinate and other target coordinates is less than the preset threshold is determined. If the distance is less than or equal to the first preset threshold, the one target coordinate and other target coordinates are grouped into one coordinate group, and if the distance is greater than the preset threshold, the one target coordinate and other target coordinates are grouped into different coordinate groups until all the target coordinates are grouped into at least one coordinate group. The distance between every two target coordinates in one coordinate group is less than or equal to the first preset threshold, and the distance between any two target coordinates in different coordinates is greater than the first preset threshold.

In substep 1042B, for each coordinate group, a square omission rework region including all the target coordinates in the coordinate group is generated, and a third path is planned in each square omission rework region. The third path at least covers all the target coordinates in the corresponding square omission rework region.

Specifically, in each coordinate group, a coordinate point in the planar coordinate system of the second electronic map is selected as a reference point. For example, the origin of the planar coordinate system is selected as the reference point. A coordinate closest to the reference point along the X-axis is selected as the starting boundary coordinate, and a coordinate farthest from the starting boundary coordinate is selected as the ending boundary coordinate. The distance values of the starting and ending boundary coordinates along the X-axis and Y-axis are used respectively as the length and width to define a square omission rework region that includes all target coordinates of the coordinate group. The autonomous operation device plans the third path in the square omission rework region, and the autonomous operation device performs linear reciprocating operations in a boustrophedon path or a spiral path according to the third path in the square omission rework region.

In substep 1043B, a fourth path is planned in two adjacent square rework regions, and the second path includes: the third path of each square omission rework region and the fourth path between two adjacent square omission rework regions.

Specifically, after the autonomous operation device completes operation in one square omission rework region, the autonomous operation device plans a fourth path, such that the autonomous operation device transitions from one square omission rework region to another adjacent square omission rework region along the fourth path. When the target coordinates in the second electronic map are divided into a plurality of coordinate groups, one corresponding square omission rework region is generated for each coordinate group. The second path includes the third path of each square omission rework region and the fourth path between two adjacent square omission rework regions.

In step 105, during the process of controlling the autonomous operation device to operate according to the second path, whether the omission event occurs when the autonomous operation device operates at the target coordinates is detected, and the target coordinates where the omission event occurs are marked.

In step 106, the marked target coordinates are displayed on the second electronic map.

Specifically, after generating the plurality of square omission rework regions, the autonomous operation device may continue to operate within the square omission rework region according to the third path included in the second path. During the operation process, the autonomous operation device continues to detect, in accordance with the method described in step 102, whether the omission event occurs when the autonomous operation device operates at the target coordinate. If the omission event occurs, the target coordinate is marked on the second electronic map, and the marked target coordinate is displayed on the second electronic map.

In some examples, for the target coordinates displayed on the second electronic map, an omission message including the location information of the target coordinates is generated and transmitted to a mobile terminal communicatively connected to the autonomous operation device, so as to notify the user of the location and type of the omission event. Corresponding resolutions are also provided, such as manually trimming dense grass, removing stones, filling depressions, removing standing water, and adjusting the position of the positioning sensor.

In some examples, steps 104 to 106 are repeatedly executed multiple times, such that the number of the target coordinates where the omission event occurs is gradually reduced by continuously performing remedial operations in the square omission rework regions, thereby minimizing the regions requiring remedial operations.

The specific steps are as follows: First, the autonomous operation device is controlled to perform Q operations on the first electronic map including a plurality of coordinates, and the target coordinates where the omission event occurs during each operation process of the autonomous operation device is recorded to form an omission coordinate set, where Q is an integer greater than 1. Next, after the Q operations of the autonomous operation device are completed, whether overlaps exist among Q omission coordinate sets recorded in the Q operation processes is determined. If overlaps exist and the number of the overlaps reaches a predetermined value, a notification including omission location information of the target coordinates overlapping across the Q omission coordinate sets is provided. During the first operation, the autonomous operation device is controlled to operate according to the first path of the preset first electronic map. During the M-th operation, path planning is performed on the first electronic map based on the omission coordinate set recorded during the (M-1)-th operation to obtain a second path, and the autonomous operation device is controlled to operate according to the second path. That is, each of the target coordinates in the omission coordinate set recorded during the (M-1)-th operation is mapped to the first electronic map to obtain a second electronic map, and the second path at least covering all the target coordinates in the second electronic map is generated. $1 < M \leq Q$, and M is an integer.

A second embodiment of the present disclosure relates to an autonomous operation device. The autonomous operation device is a robot that can autonomously move in a preset area and perform a specific operation, typically such as an intelligent sweeper/vacuum cleaner performing a cleaning operation, or an intelligent lawn mower performing a lawn mowing operation. The specific operation, in particular, refers to an operation that processes the work surface and changes the state of the work surface. The autonomous operation device is configured to perform the operation method for an autonomous operation device in the first embodiment.

The following provides a detailed description by taking an intelligent lawn mower as an example of the autonomous operation device. With reference to FIG. 8 and FIG. 9, the autonomous operation device 100, acting as an intelligent lawn mower, is capable of autonomously performing mowing operations on the ground. The autonomous operation device 100 at least includes a main body mechanism 12, a movement mechanism 14, a working mechanism, an energy module, a detection module, an interaction module, a control module 18, and the like.

The main body mechanism 12 typically includes a chassis and a housing. The chassis is configured to install and accommodate functional mechanisms and functional modules, such as the movement mechanism 14, the working mechanism, the energy module, the detection module, the interaction module, and the control module 18. The housing is typically configured to at least partially cover the chassis, primarily for enhancing the aesthetics and recognizability of the autonomous operation device 100. In the embodiment, the housing is configured to be repositionable for translation and/or rotation relative to the chassis under an external force. In cooperation with a suitable detection module, exemplarily such as a Hall sensor, the housing can further serve to detect events like collisions and lifting.

The movement mechanism 14 is configured to support the main body mechanism 12 on the ground and drive the main body mechanism 12 to move on the ground, and generally includes a wheeled movement mechanism, a tracked or semi-tracked movement mechanism, a walking movement mechanism 14, or the like. In the embodiment, the movement mechanism 14 is a wheeled movement mechanism, which includes at least one driving wheel 142 and at least one walking prime mover 144. The walking prime mover 144 is preferably a motor, and in other embodiments, the walking prime mover may be an internal combustion engine or a machine that uses other types of energy sources to generate power. In the embodiment, the walking prime mover is preferably provided with a left driving wheel, a left walking prime mover that drives the left driving wheel, a right driving wheel, and a right walking prime mover that drives the right driving wheel. In the embodiment, the straight-line movement of the autonomous operation device 100 is achieved by the equidirectional and constant-speed rotation of the left and right driving wheels, and the steering movement is achieved by the equidirectional and differential-speed rotation or the opposite-direction rotation of the left and right driving wheels. In other embodiments, the movement mechanism 14 further includes a steering mechanism independent from the driving wheels and a steering prime mover independent of the walking prime mover 144. In the embodiment, the movement mechanism 14 further includes at least one driven wheel, typically configured as a universal wheel. The driving wheel 142 and the driven wheel are located at the front and rear ends of the robot, respectively.

The working mechanism is configured to perform a specific operational task and includes a working component and a working prime mover driving the working component to operate. Exemplarily, for an intelligent sweeper/vacuum cleaner, the working component includes a roller brush, a dust suction pipe, a dust collection chamber, and the like; for an intelligent lawn mower, the working component includes a cutting blade or a cutting deck, and further includes other components for optimizing or adjusting the mowing effect, such as a height adjustment mechanism for adjusting the mowing height. The working prime mover is preferably a motor, and in other embodiments, the working prime mover may be an internal combustion engine or a machine that uses other types of energy sources to generate power. In some other embodiments, the working prime mover and the walking prime mover are configured as a same prime mover.

The energy module is configured to provide energy for various tasks of the autonomous operation device 100. In the embodiment, the energy module includes a battery and a charging connection structure. The battery is preferably a rechargeable battery, and the charging connection structure is preferably a charging electrode that may be exposed outside the autonomous operation device.

The detection module is configured as at least one sensor that senses an environmental parameter or a working parameter of the autonomous operation device 100. Typically, the detection module may include sensors related to the definition of the working area S, such as magnetic induction, collision, ultrasonic, infrared, radio, and various types. The types of sensors are adapted to the position and number of the corresponding signal generation apparatus. The detection module may also include positioning navigation related sensors, such as satellite positioning devices 162, laser positioning devices, electronic compasses, acceleration sensors, odometers, angle sensors, geomagnetic sensors, and vision-based positioning device 164. The detection module may further include sensors related to its own working safety, such as an obstacle sensor, a lifting sensor, a battery pack temperature sensor, and the like. The detection module may further include sensors related to an external environment, such as an ambient temperature sensor, an ambient humidity sensor, a light sensor, and a rain sensor. In the embodiment, the inertial sensor and the positioning sensor in the detection module sense the operational data of the autonomous operation device 100 and then calculate the deviation value of the operational data, thereby determining whether the omission event occurs when the autonomous operation device operates at the grid cell.

The control module 18 typically includes at least one processor and at least one non-volatile memory. The memory stores a pre-written computer program or an instruction set, and the processor, according to the computer program or the instruction set, controls the performance of movements, work, and the like of the autonomous operation device 100. Further, the control module 18 can also control and adjust the corresponding actions of the autonomous operation device 100 and modify parameters in the memory according to a signal from the detection module and/or a user control instruction. In the embodiment, the operation method for an autonomous operation device in the first embodiment is performed by the control module 18.

The interaction module is configured at least to receive control instruction information inputted by a user, transmit information requiring user perception, and communicate with other systems or devices to transmit and receive information. The interaction module includes an input apparatus arranged on the autonomous operation device 100 for receiving control instruction information inputted by a user, typically such as a control panel and an emergency stop key. The interaction module further includes a display screen, an indicator light, and/or a buzzer arranged on the autonomous operation device 100, enabling a user to perceive information through light or sound. In other embodiments, the interaction module includes a communication module arranged on the autonomous operation device 100 and a terminal device independent from the autonomous operation device 100, such as a mobile phone, a computer, or a network server. User control instruction information or other information may be inputted on the terminal device and reach the autonomous operation device 100 via a wired or wireless communication module.

The boundary 800 is the perimeter of the working area S of the robotic system and generally includes an outer boundary and an inner boundary. The autonomous operation device 100 is constrained to moving and working within the outer boundary, outside the inner boundary, or between the outer boundary and the inner boundary. The boundary may be physical, typically such as a wall, a fence, or a railing. The boundary may also be virtual, typically such as a virtual boundary signal emitted by a boundary signal generation apparatus. The virtual boundary signal is generally an electromagnetic signal or an optical signal. In some existing technologies, the boundary 800 is configured as a closed conductive wire electrically connected to the boundary signal generation apparatus, and the boundary signal generation apparatus is typically disposed within the docking station 900. For the autonomous operation device 100 of the present disclosure, which is provided with a positioning device, the virtual boundary is constructed in an electronic map formed exemplarily by two-dimensional or three-dimensional coordinates.

The docking station 900 is typically constructed on the boundary 800 or within the boundary 800 for the autonomous operation device 100 to dock, and is particularly capable of supplying energy to the autonomous operation device 100 docked at the docking station.

Similarly, since the second embodiment corresponds to the first embodiment, the second embodiment may be implemented in conjunction with the first embodiment. The relevant technical details described in the first embodiment remain valid for the second embodiment, and the technical effects achieved in the first embodiment are equally achievable in the second embodiment. For the sake of brevity, redundant descriptions are omitted here. Accordingly, the relevant technical details described in the first embodiment are also applicable to the second embodiment.

The preferred embodiments of the present disclosure have been described in detail above. However, it should be understood that an aspect of the embodiments can be modified, if necessary, to employ aspects, features and concepts of the various patents, applications and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

**Claims**

1. An operation method for an autonomous operation device, comprising:

controlling the autonomous operation device to operate according to a first path of a preset first electronic map, wherein the first electronic map comprises a plurality of coordinates, and the first path covers passable coordinates in the first electronic map; and
detecting, during an operation process of the autonomous operation device, whether an omission event occurs when the autonomous operation device operates at the passable coordinates, and recording parameter information of target coordinates where the omission event occurs, wherein the target coordinates are coordinates where the omission event occurs during the operation process of the autonomous operation device.

2. The operation method for an autonomous operation device according to claim 0, further comprising, after recording parameter information of the target coordinates where the omission event occurs:

mapping, after the autonomous operation device completes operation according to the first path, each of the target coordinates where the omission event occurs to the first electronic map to obtain a second electronic map; and
generating a second path at least covering all the target coordinates in the second electronic map, and controlling the autonomous operation device to operate according to the second path.

3. The operation method according to claim 0 further comprising:

detecting, during the process of controlling the autonomous operation device to operate according to the second path, whether the omission event occurs when the autonomous operation device operates at the target coordinates, and marking the target coordinates where the omission event occurs; and
displaying the marked target coordinates on the second electronic map.

4. The operation method according to claim 0, wherein generating the second path at least covering all the target coordinates in the second electronic map comprises:

selecting two target coordinates from all the target coordinates as a starting coordinate and an ending coordinate, respectively; and
generating, in the second electronic map, a shortest path starting from the starting coordinate and ending at the ending coordinate, and covering all the target coordinates, as the second path.

5. The operation method according to claim 0, wherein generating the second path at least covering all the target coordinates in the second electronic map comprises:

dividing the target coordinates in the second electronic map into a plurality of coordinate groups, each of the coordinate groups comprising a plurality of the target coordinates, wherein for each target coordinate in each coordinate group, a distance between the target coordinate and at least one target coordinate in the same coordinate group is less than or equal to a first preset threshold, and a distance between the target coordinate and any one target coordinate in different coordinate groups is greater than the first preset threshold;
for each coordinate group, generating a square omission rework region comprising all the target coordinates in the coordinate group, and planning a third path in each square omission rework region, wherein the third path at least covers all the target coordinates in the corresponding square omission rework region; and
planning a fourth path in two adjacent square omission rework regions, wherein the second path comprises: the third path of each square omission rework region and the fourth path between two adjacent square omission rework regions.

6. The operation method according to claim 0 or 0, wherein detecting whether the omission event occurs when the autonomous operation device operates at the coordinates comprises:

for each of the coordinates, acquiring operational data collected by a sensing device in the autonomous operation device in the process that the autonomous operation device operates at the coordinate; and
for each of the coordinates, determining, based on the operational data corresponding to the coordinate, whether the omission event occurs when the autonomous operation device operates at the coordinate.

7. The operation method according to claim 0, wherein the plurality of coordinates in the first electronic map are divided into a plurality of grid cells;
detecting, during the operation process of the autonomous operation device, whether the omission event occurs when the autonomous operation device operates at the passable coordinates, and recording parameter information of the target coordinates where the omission event occurs comprises:
detecting, during the operation process of the autonomous operation device, whether the omission event occurs when the autonomous operation device operates at the passable coordinates, and recording parameter information of target grid cells where the omission event occurs, wherein the target grid cells are the grid cells to which the coordinates where the omission event occurs during the operation process of the autonomous operation device belong.

8. The operation method according to claim 0, wherein the parameter information comprises an elevation coordinate representing a height of the coordinate point in a Z-axis direction.

9. The operation method according to claim 0, comprising

controlling the autonomous operation device to perform Q operations on the first electronic map comprising a plurality of coordinates, and recording the target coordinates where the omission event occurs during each operation process of the autonomous operation device to form an omission coordinate set, wherein Q is an integer greater than 1;
determining, after the Q operations of the autonomous operation device are completed, whether overlaps exist among Q omission coordinate sets recorded in the Q operation processes; and
if overlaps exist among the Q omission coordinate sets recorded in the Q operation processes, providing a notification comprising omission location information of the target coordinates overlapping across the Q omission coordinate sets.

10. The operation method according to claim 0, wherein if overlaps exist among the Q omission coordinate sets recorded in the Q operation processes, and the number of the overlaps reaches a predetermined value, a notification comprising omission location information of the target coordinates overlapping across the Q omission coordinate sets is provided.

11. An information interaction method for the autonomous operation device according to any one of claim 0 or 0, wherein controlling the autonomous operation device to perform Q operations on the first electronic map comprising a plurality of coordinates comprises:

during a first operation, controlling the autonomous operation device to operate according to the first path of the preset first electronic map; and
during an M-th operation, performing path planning on the first electronic map based on the omission coordinate set recorded during the (M-1)-th operation to obtain a second path, and controlling the autonomous operation device to operate according to the second path, wherein $1 < M \leq Q$, and M is an integer.

12. The information interaction method for the autonomous operation device according to claim 0, wherein performing path planning on the first electronic map based on the omission coordinate set recorded during the (M-1)-th operation to obtain the second path comprises:

mapping each of the target coordinates in the omission coordinate set recorded during the (M-1)-th operation to the first electronic map to obtain a second electronic map; and
generating the second path at least covering all the target coordinates in the second electronic map.

13. The operation method according to claim 0, comprising

controlling the autonomous operation device to operate on the first electronic map comprising a plurality of coordinates;
acquiring operational data collected by a sensing device in the autonomous operation device when the autonomous operation device operates at the coordinates; and
for each of the coordinates, determining, based on the operational data corresponding to the coordinate, whether the omission event occurs when the autonomous operation device operates at the coordinate.

14. The operation method according to claim 0, wherein determining, based on the operational data corresponding to the coordinate, whether the omission event occurs when the autonomous operation device operates at the coordinate comprises:

calculating a deviation value of the operational data based on the operational data within a preset time period in the operational data corresponding to the coordinate; and
if the deviation value is greater than a preset deviation threshold, determining that an omission event occurs when the autonomous operation device operates at the coordinate,

wherein the operational data comprises any one or more of linear velocity information, linear acceleration information, angular velocity information, angular acceleration information, heading information, and positional coordinate information of the autonomous operation device during operation.

15. An autonomous operation device, comprising a control module and a detection module connected to the control module,

wherein the control module is configured to control the autonomous operation device to operate according to a first path of a preset first electronic map, the first electronic map comprises a plurality of coordinates, and the first path covers passable coordinates in the first electronic map; and

the detection module is configured to detect, during an operation process of the autonomous operation device, whether an omission event occurs when the autonomous operation device operates at the coordinates, and record parameter information of target coordinates where the omission event occurs, and the target coordinates are coordinates where the omission event occurs during the operation process of the autonomous operation device.

16. The autonomous operation device according to claim 0, wherein the control module is further configured to map, after the autonomous operation device completes operation according to the first path, each of the target coordinates where the omission event occurs to the first electronic map to obtain a second electronic map; and

the control module is further configured to generate a second path at least covering all the target coordinates in the second electronic map, and control the autonomous operation device to operate according to the second path.

17. The autonomous operation device according to claim 0, wherein the detection module is configured to detect, during the process of controlling the autonomous operation device to operate according to the second path, whether the omission event occurs when the autonomous operation device operates at the target coordinates, and mark the target coordinates where the omission event occurs; and

the detection module is further configured to display the marked target coordinates on the second electronic map.

18. The autonomous operation device according to claim 0, wherein the detection module is further configured to, for each of the coordinates, acquire operational data collected by a sensing device in the autonomous operation device in the process that the autonomous operation device operates at the coordinate; and

for each of the coordinates, determine, based on the operational data corresponding to the coordinate, whether the omission event occurs when the autonomous operation device operates at the coordinate.

**FIG. 1**

1041A

1042B

**FIG. 2**

1041B

1042B

1043B

**FIG. 3**

**FIG. 4**

**FIG.  5**

## INTERNATIONAL SEARCH REPORT

| | International application No. |
|---|---|
| | **PCT/CN2023/130029** |

**A.    CLASSIFICATION OF SUBJECT MATTER**

G05D1/02(2020.01)i

According to International Patent Classification (IPC) or to both national classification and IPC

**B.    FIELDS SEARCHED**

Minimum documentation searched (classification system followed by classification symbols)

IPC:G05D

Documentation searched other than minimum documentation to the extent that such documents are included in the fields searched

Electronic data base consulted during the international search (name of data base and, where practicable, search terms used)

CNABS: CNTXT; CNKI; VEN; ENTXT; ENTXTC: 白马科技, 割草, 除草, 扫地, 拖地, 自主设备, 遗漏, 漏割, 偏航, 偏离, 偏移, 线速度, 角速度, 航向, 方向, 路径, 路线, 多次, 重复, 重叠, mow, cut grass, sweeper, omission, yaw, deviate, heading direction, route, path, way, line, many times, repeat

**C.    DOCUMENTS CONSIDERED TO BE RELEVANT**

| Category* | Citation of document, with indication, where appropriate, of the relevant passages | Relevant to claim No. |
|---|---|---|
| X | CN 112612280 A (GLOBE (JIANGSU) CO., LTD.) 06 April 2021 (2021-04-06) description, paragraphs [0035]-[0096] | 1-3, 6-8, 13-18 |
| Y | CN 112612280 A (GLOBE (JIANGSU) CO., LTD.) 06 April 2021 (2021-04-06) description, paragraphs [0035]-[0096] | 4, 5 |
| Y | CN 114089765 A (JIANGSU UNIVERSITY OF SCIENCE AND TECHNOLOGY) 25 February 2022 (2022-02-25) description, paragraphs [0004]-[0042] | 4, 5 |
| A | CN 115454054 A (SHENZHEN TOPBAND CO., LTD.) 09 December 2022 (2022-12-09) entire document | 1-18 |
| A | JP 2018055180 A (YANMAR CO., LTD.) 05 April 2018 (2018-04-05) entire document | 1-18 |
| A | CN 110018686 A (NINGBO DAYE GARDEN MACHINERY CO., LTD.) 16 July 2019 (2019-07-16) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **24 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130029**

| Patent document cited in search report | | | Publication date (day/month/year) | Patent family member(s) | | | Publication date (day/month/year) |
|---|---|---|---|---|---|---|---|
| CN | 112612280 | A | 06 April 2021 | None | | | |
| CN | 114089765 | A | 25 February 2022 | None | | | |
| CN | 115454054 | A | 09 December 2022 | None | | | |
| JP | 2018055180 | A | 05 April 2018 | JP | 6695248 | B2 | 20 May 2020 |
| CN | 110018686 | A | 16 July 2019 | None | | | |

Form PCT/ISA/210 (patent family annex) (July 2022)